# NEUE EUROPÄISCHE PATENTSCHRIFT

(11) **EP 0 495 410 B2**
(45) Veröffentlichungstag und Bekanntmachung des Hinweises auf die Entscheidung über den Einspruch: **21.02.2001**
(45) Hinweis auf die Patenterteilung: 23.04.1997
(21) Anmeldenummer: 92100341.4
(22) Anmeldetag: 10.01.1992
(51) Int. Cl.: B60R 21/16

(54) **Aufblasbarer Gassack für ein Rückhaltesystem in Fahrzeugen**
Inflatable airbag for a restraining system in vehicles
Coussin d'air gonflable pour un système de retenue dans des véhicules

(30) Priorität: 17.01.1991 DE 4101287
(43) Veröffentlichungstag der Anmeldung: 22.07.1992
(73) Patentinhaber: TRW Occupant Restraint Systems GmbH, 73553 Alfdorf (DE)
(72) Erfinder: Eyrainer, Heinz, W-7076 Waldstetten (DE); Kolb, Andreas, W-7070 Schwäbisch Gmünd-Wetzgau (DE)
(74) Vertreter: Degwert, Hartmut, Dipl.-Phys.

(56) Entgegenhaltungen:
- DE-A- 1 680 034
- DE-A- 1 780 304
- DE-A- 2 542 764
- DE-A- 3 217 464
- US-A- 3 990 726
- US-A- 4 805 930

## Beschreibung

Die Erfindung betrifft einen aufblasbaren Gassack für ein Rückhaltesystem in Fahrzeugen gemäß dem Oberbegriff des Anspruchs 1. Ein solcher Gassack ist aus der US-A-4 805 930 bekannt. Bekanntlich wird ein Gassack in einem Rückhaltesystem für Fahrzeuge innerhalb weniger Millisekunden nach einem Fahrzeugaufprall durch einen Gasgenerator aufgeblasen. Um eine Energieabsorption zu ermöglichen, nachdem der Fahrzeuginsasse mit dem Gassack in Berührung gekommen ist, wird die Wandung des Gassacks aus einem gasdurchlässigen Gewebe hergestellt oder mit Abströmöffnungen versehen, die ein kontrolliertes Abströmen aus dem Inneren des Gassacks ermöglichen.

Das Ausströmen der Gase durch die Wandung oder die Abströmöffnungen des Gassacks hindurch erfolgt bereits unmittelbar zu Beginn des Rückhaltevorganges, da dann ein hoher Druck im Inneren des Gassacks herrscht. Die Erfindung geht von der Erkenntnis aus, daß die physikalischen und kinematischen Bedingungen beim Rückhaltevorgang nur dann optimal sind, wenn der Insasse zu Beginn des Rückhaltevorgangs einen möglichst harten Gassack antrifft, da dieser Zeitpunkt in die Zeitspanne fällt, während welcher die aufprallbedingte Stauchung des Fahrzeugs erfolgt. Die Stauchung des Fahrzeugs hat eine dämpfende Wirkung, so daß es für den Rückhaltevorgang günstig ist, wenn der Gassack gleichzeitig relativ hart ist. Wenn am Ende des Fahrzeug-Stauchweges, nach Fahrzeug-Stillstand oder Bewegungsumkehr durch Rückprall keine dämpfende Wirkung durch die Fahrzeugstauchung mehr zur Verfügung steht, ist aber ein weiterer Abbau der kinetischen Energie des Fahrzeuginsassen dadurch möglich, daß erst ab diesem Zeitpunkt oder kurz zuvor ein kontrolliertes Abströmen der Gase aus dem Gassack nach außen erfolgt. Auf diese Weise kann die Insassen-Restenergie über den Gassack abgebaut werden. Zu diesem Zweck sollte das durch den Gassack gebildete Aufprallkissen weich und energieabsorbierend sein.

Ein aufblasbarer Gassack für ein Rückhaltesystem in Fahrzeugen, bei dem auf die Wandung des Gassacks ein Materialstück aufgelegt ist, innerhalb dessen wenigstens eine Aufreißlinie gebildet ist, die bis zu einem vorbestimmten Innendruck des Gassacks verschlossen bleibt und bei Überschreiten dieses Innendrucks freigegeben wird, ist aus der DE-A-25 42 764 bekannt. Das aufgelegte Materialstück dient dabei zur Verstärkung der Behälterwand im Bereich der Aufreißlinie. Die Aufreißlinie wird durch einen Schlitz gebildet, der mittels Vernähungen verschlossen ist. Die Vernähungen reißen bei Erreichen einer bestimmten Zugspannung, die dann erzielt wird, wenn der Körper des Fahrzeuginsassen in den aufgeblasenen Gassack gefallen ist.

Ferner ist ein aufblasbarer Gassack für ein Rückhaltesystem in Fahrzeugen, bei dem in der Wandung des Gassacks wenigstens eine Aufreißlinie gebildet ist, die bis zu einem vorbestimmten Innendruck des Gassacks verschlossen bleibt und bei Überschreiten dieses Innendrucks freigegeben wird, und das Material der Gassackwandung entlang der Aufreißlinie geschwächt ist, aus der US-A-3 990 726 bekannt. Die Aufreißlinie wird dabei durch einen Schlitz gebildet, der durch Vernähen, Kleben oder Schweißen verschlossen ist. Insbesondere kann die Aufreißlinie entlang einer Naht des Gassacks ausgebildet sein, wobei die Naht im Bereich der Aufreißlinie schwächer ausgeführt ist.

Gemäß der Erfindung wird ein aufblasbarer Gassack für ein Rückhaltesystem in Fahrzeugen mit den Oberbegriffsmerkmalen des Patentanspruchs 1 geschaffen, bei dem die Aufreißlinie zwei kreuzförmig angeordnete Abschnitte aufweist, die durch vier in dem Materialstück kreuzförmig angeordnete Schlitze gebildet sind, deren innere Enden außerhalb des Mittelbereichs des Materialstücks liegen.

In der Wandung des Gassacks ist wenigstens eine Entlastungsöffnung vordefiniert, die bis zu einem vorbestimmten Innendruck des Gassacks verschlossen und beim Überschreiten dieses Innendrucks freigegeben ist. Der vorbestimmte Innendruck ist so gewählt, daß eine Freigabe der Entlastungsöffung oder Entlastungsöffnungen im Verlaufe des Rückhaltevorgangs erfolgt, wenn durch das Eintauchen des Fahrzeuginsassen in den Gassack der Innendruck desselben zunimmt. Durch geeignete Dimensionierung der Parameter, durch welche die Freigabe der Entlastungsöffnung gesteuert wird, kann abhängig vom jeweiligen Fahrzeugtyp erreicht werden, daß die Dämpfungswirkung aufgrund des Fahrzeug-Stauchweges optimal ausgenutzt wird und erst anschließend oder mit geringer Überschneidung die Dämpfungswirkung durch Energieabsorption im Gassack eintritt. Da nun auch die durch den Gassack gegebene Dämpfung optimal ausgenutzt wird, kann die gesamte, durch Fahrzeugstauchung und Energieabsorption im Gassack gegebene Dämpfungswirkung erheblich gesteigert werden.

Die Erfindung wird nun unter Bezugnahme auf die Zeichnung näher beschrieben. In der Zeichnung zeigen:
- Fig. 1: eine schematische Perspektivansicht eines Gassacks in aufgeblasenem Zustand;
- Fig. 2 und 3: vergrößerte Teilansichten eines Gassacks, der keine Ausführungsert der Erfindung darstellt die Entlastungsöffnungen des Gassacks beispielhaft verschiedene Entlastungsöffnungen des Gassacks darstellen;
- Fig. 4: eine vergrößerte Teilansicht des erfindungsgemäßen Gassacks; und
- Fig. 5 - 11: vergrößerte Teilansichten des Gassacks, die beispielhaft weitere verschiedene Entlastungsöffnungen eines keine Ausführungsert der Erfindung darstellenden Gassacks darstellen.

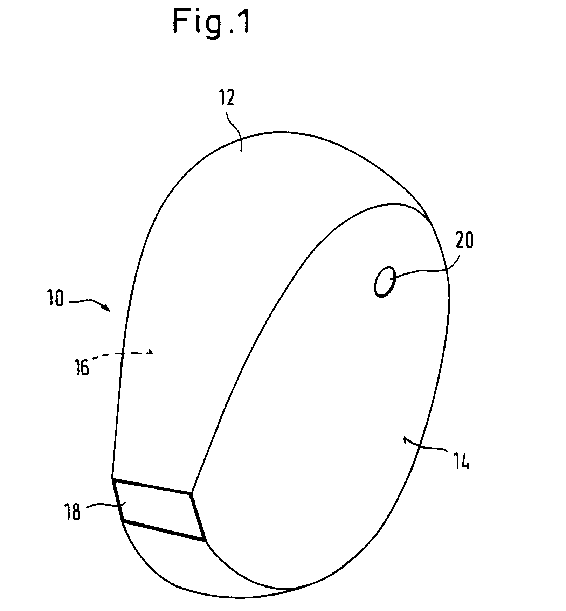

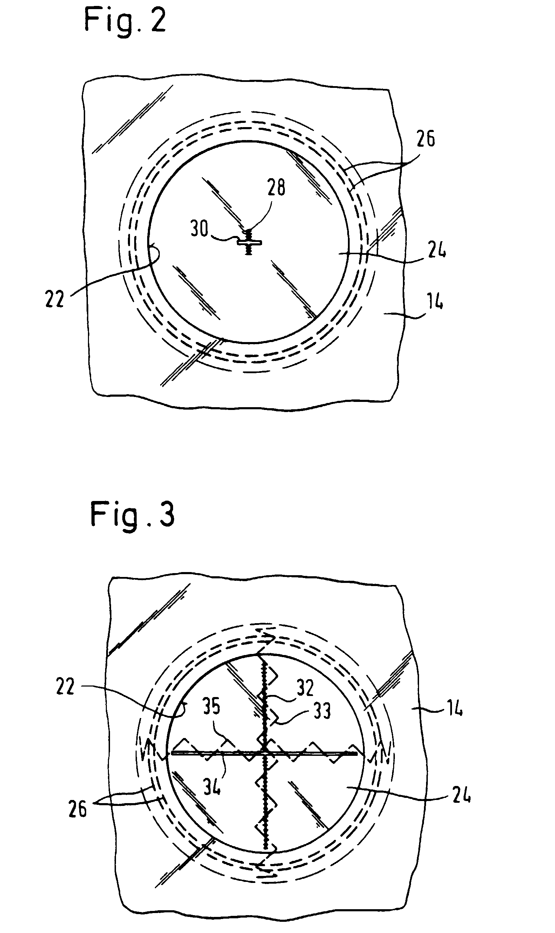

Der in Fig. 1 allgemein mit 10 bezeichnete Gassack besteht aus drei Wandungsabschnitten: einem Mantelteil 12 und zwei Seitenteilen 14, 16. In dem Mantelteil 12 ist eine Anschlußöffnung 18 gebildet, an deren Berandung der Gassack 10 mit dem Gehäuse eines Gasgenerators verbunden wird. In dem Seitenteil 14 des Gassacks ist eine allgemein mit 20 bezeichnete Entlastungsöffnung vordefiniert. Verschiedene Ausführungsformen dieser Entlastungsöffnung 20 werden nun unter Bezugnahme auf die Figuren 2 bis 11 näher beschrieben.

Bei dem Beispiel nach Fig. 2 ist in der Wandung des Seitenteils 14 eine runde Öffnung ausgespart. Die so gebildete Aussparung 22 ist durch ein auf die Innenseite des Gassacks aufgelegtes Materialstück 24 abgedeckt, das die Berandung der Aussparung 22 überdeckt. Das Materialstück 24 ist an seinem Außenrand mit dem die Aussparung 22 umgebenden Randbereich des Seitenteils 14 durch eine Doppelnaht 26 verbunden. In der Mitte des Materialstücks 24 sind zwei kreuzförmig angeordnete Schlitze 28, 30 gebildet, deren Ausdehnung auf die mittlere Zone des Materialstücks 24 begrenzt ist. Die Schlitze 28, 30 bilden jeweils den Beginn einer Aufreißlinie, die sich etwa bis zur Berandung der Aussparung 22 erstreckt. In dem in Fig. 2 gezeigten Zustand kann durch die Schlitze 28, 30 nur wenig Gas entweichen. Wird aber ein bestimmter Innendruck des Gassacks erreicht, werden die Schlitze 28, 30 in Längsrichtung ausgedehnt, da das Materialstück 24 an den Enden der Schlitze 28, 30 aufreißt. Der durch das Materialstück 24 definierte Kreis wird also durch zwei diametrale, einander rechtwinklig kreuzende Aufreißlinien in vier Sektoren geteilt, die durch den Innendruck des Gassacks auswärtsgestülpt werden und eine Entlastungsöffnung freigeben, deren Größe etwa der Fläche im Inneren der Aussparung 22 entspricht. Die Reißfestigkeit des Materials, aus dem das Materialstück 24 besteht, ist so bestimmt, daß die Entlastungsöffnung bei dem gewünschten Innendruck freigegeben wird, der je nach Fahrzeugtyp und Stauchverhalten desselben unterschiedlich sein kann.

Das Beispiel nach Fig. 3 unterscheidet sich von der zuvor beschriebenen dadurch, daß in dem Materialstück 24 zwei einander rechtwinklig kreuzende Schlitze 32, 34 gebildet sind, die jeweils durch eine Naht 33 bzw. 35 geschlossen sind, welche die beiderseits des zugehörigen Schlitzes gelegenen Teile des Materialstücks 24 miteinander verbindet. Bei dem in Fig. 3 gezeigten Zustand kann durch die geschlossengehaltenen Schlitze 32, 34 nur wenig Gas austreten. Bei einem vorbestimmten Wert des Gassack-Innendrucks reißen die Nähte 33, 35 auf, so daß die Entlastungsöffnung freigegeben wird.

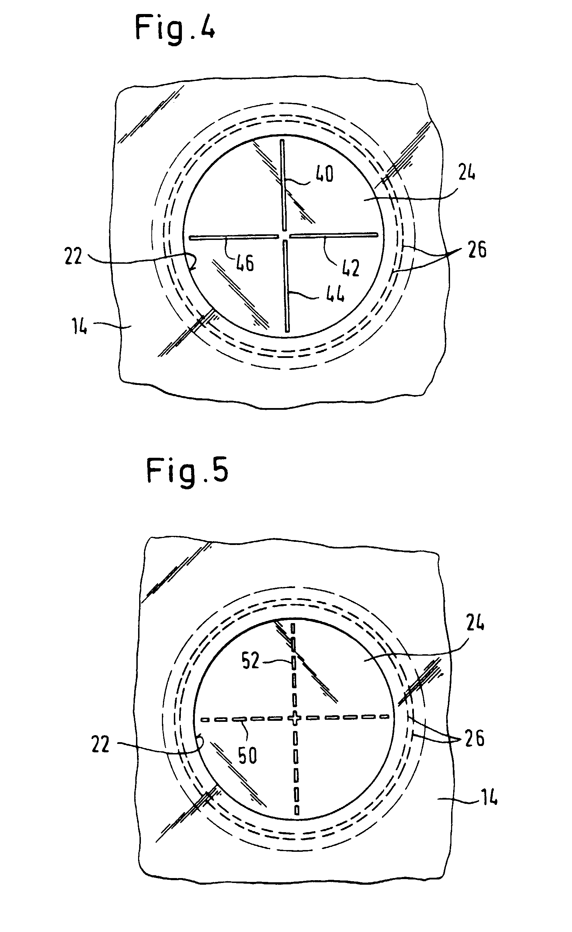

Bei der erfindungsgemäßen Ausführungsform nach Fig. 4 sind in dem Materialstück 24 vier kreuzförmig angeordnete Schlitze 40, 42, 44, 46 angebracht. Die inneren Enden der Schlitze 40 bis 46 erstrecken sich aber nicht bis in den Mittelbereich des Materialstücks 24 hinein, so daß zwei diametrale, jedoch in der Mitte unterbrochene, einander kreuzende Aufreißlinien entstehen. Erst bei dem gewünschten Innendruck wird auch der zentrale Teil des Materialstücks 24 zwischen den Schlitzen 40 bis 46 aufgerissen.

Bei dem Beispiel nach Fig. 5 sind in dem Materialstück 24 zwei einander rechtwinklig kreuzende, diametral verlaufende Aufreißlinien 50, 52 durch aufeinanderfolgende, voneinander beabstandete Schlitze gebildet. Die zwischen den einzelnen Schlitzen verbleibenden Stege werden bei einem bestimmten Wert des Gassack-Innendrucks aufgerissen, so daß die Entlastungsöffnung freigegeben wird.

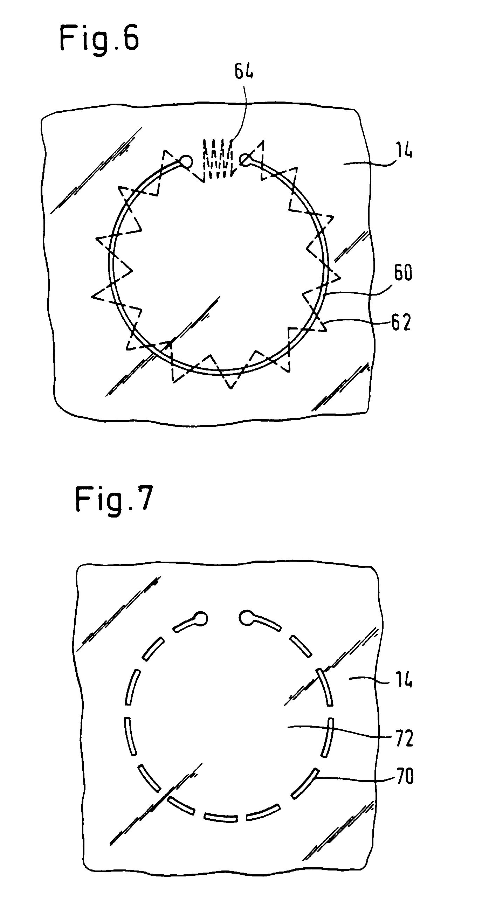

Bei dem in Fig. 6 gezeigten Beispiel ist ein teilkreisförmiger Schlitz 60 in der Wandung des Seitenteils 14 angebracht. Der Bereich innerhalb des Schlitzes 60 bildet eine Klappe, die durch den zwischen den Endpunkten des Schlitzes gelegenen Wandungsteil mit der übrigen Wandung des Seitenteils 14 verbunden ist. Die beiderseits des Schlitzes 60 gelegenen Wandungsteile sind durch eine zickzackförmig verlaufende Naht 62 miteinander verbunden. Der Wandungsteil zwischen den Enden des Schlitzes 60 ist durch einige quer zur Verlaufrichtung des Schlitzes 60 geführte Nahtstiche 64 verstärkt. Die Festigkeit der Naht 62 ist so bemessen, daß diese bei dem gewünschten Gassack-Innendruck aufreißt und die Entlastungsöffnung freigibt.

Bei der in Fig. 7 gezeigten Abwandlung des voranstehend beschriebenen Beispiels ist eine teilkreisförmige Aufreißlinie 70 durch in Abständen aufeinanderfolgende einzelne Schlitze gebildet. Durch die zwischen den einzelnen Schlitzen verbliebenden Stege bleibt der im Inneren der Aufreißlinie 70 gelegene, klappenartige Teil 72 der Wandung des Seitenteils 14 mit dem übrigen Wandungsteil desselben verbunden. Bei dem gewünschten Gassack-Innendruck werden diese Stege jedoch aufgerissen, so daß die Entlastungsöffnung freigegeben wird.

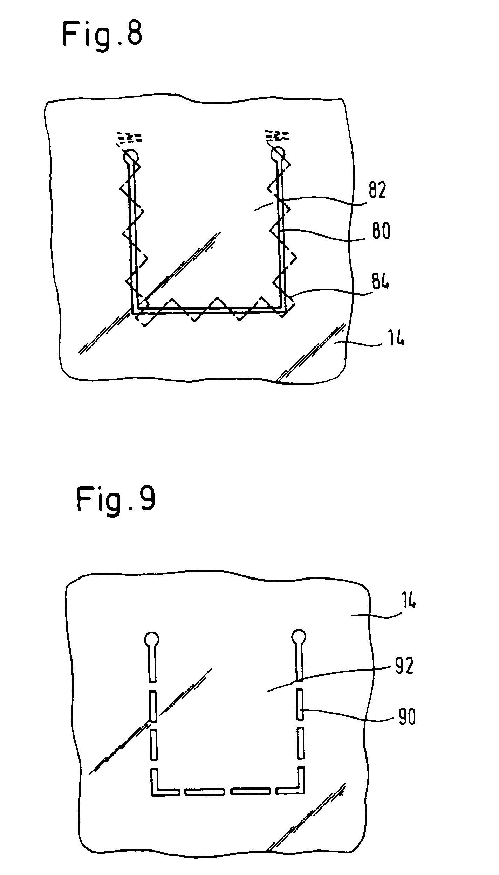

Die Beispiele nach den Figuren 8 und 9 beruhen auf dem gleichen Prinzip wie die zuvor beschriebenen Beispiele formen nach den Figuren 6 und 7, jedoch ist die durch den Schlitz 80 in Fig. 8 bzw. die Aufreißlinie 90 in Fig. 9 definierte Entlastungsöffnung nicht kreis-, sondern rechteckförmig. Entsprechend ist auch der klappenartige Wandungsteil 82, der im Inneren des durch eine Naht 84 zusammengehaltenen Schlitzes 80 gelegen ist, rechteckförmig, ebenso wie der klappenartige Wandungsteil 92, der durch die Materialstege zwischen den einzelnen Schlitzen der Aufreißlinie 90 mit der übrigen Wandung des Seitenteils 14 verbunden ist.

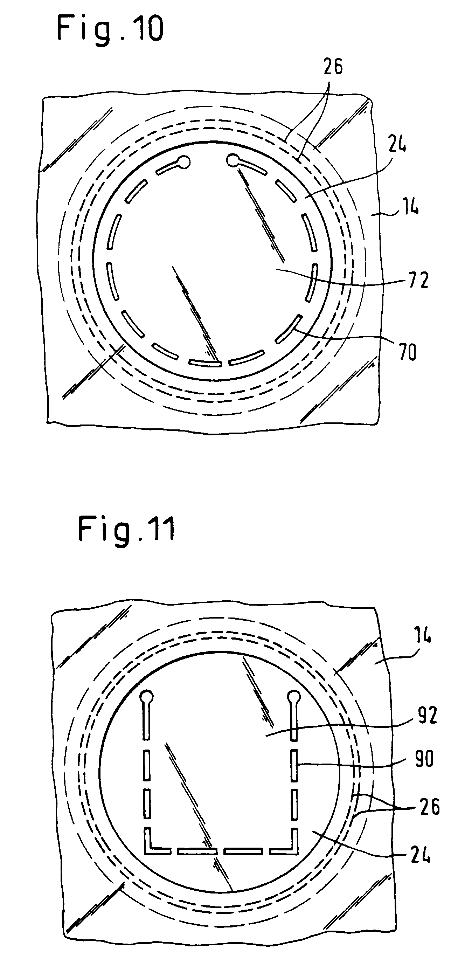

Die Beispiele nach den Fig. 10 und 11 gleichen denen nach Fig. 7 und 9, unterscheiden sich jedoch hiervon dadurch, daß die Aufreißlinie 70 bzw. 90 in einem gesonderten, von innen aufgelegten Materialstück 24, ähnlich wie bei Fig. 2 bis 5, gebildet ist. Es wurde gefunden, daß die Aufreißeigenschaften so unabhängig vom Material des eigentlichen Gassacks optimal ausgelegt werden können.

Vorstehend wurde eine erfindungsgemäße Ausführungsform mit einer einzelnen Entlastungsöffnung beschrieben. Der Gassack 10 (Fig. 1) kann mit mehreren derartigen Entlastungsöffnungen versehen sein. Anzahl und Anordnung der Entlastungsöffnungen hängen von dem jeweiligen Verwendungsfall ab.

## Patentansprüche

1. Aufblasbarer Gassack für ein Rückhaltesystem in Fahrzeugen, wobei auf die Wandung des Gassacks ein Materialstück (24) aufgelegt ist, wobei die Wandung des Gassacks eine ausgesparte Entlastungsöffnung (20) aufweist, die durch das Materialstück (24) verschlossen wird, welches entlang der Berandung der Entlastungsöffnung (20) durch eine Naht (26) mit der Wandung des Gassacks verbunden ist, **dadurch gekennzeichnet**, daß innerhalb des Materialstücks (24) wenigstens eine Aufreißlinie gebildet ist, die bis zu einem vorbestimmten Innendruck des Gassacks verschlossen bleibt und bei Überschreiten dieses Innendrucks freigegeben wird, und daß die Aufreißlinie aus zwei kreuzförmig angeordneten Abschnitten besteht, die durch vier in dem Materialstück (24) kreuzförmig angeordnete Schlitze (40, 42, 44, 46) gebildet sind, deren innere Enden außerhalb des Mittelbereichs des Materialstücks (24) liegen.

2. Gassack nach Anspruch 1, **dadurch gekennzeichnet**, daß die Entlastungsöffnung (20) allgemein kreisförmig ist.

3. Gassack nach Anspruch 1, **dadurch gekennzeichnet**, daß die Entlastungsöffnung (20) allgemein rechteckförmig ist.

## Claims

1. An inflatable gas bag for a restraint system in vehicles, a material piece (24) being arranged on the wall of the gas bag, the wall of the gas bag having a recessed relief opening (20) which is closed by the material piece (24) connected to the wall of the gas bag along the edge of the relief opening (20) by a seam (26), characterized in that at least one tear line is defined within the material piece (24) which remains closed up to a predetermined internal pressure of the gas bag and is freed when said internal pressure is exceeded, and that the tear line consists of two crosswise arranged portions formed by four slits (40, 42, 44, 46) which are arranged crosswise in the material piece (24) and whose inner ends are disposed outside the centre region of the material piece (24).

2. The gas bag according to claim 1, characterized in that the relief opening (20) is generally circular.

3. The gas bag according to claim 1, characterized in that the relief opening (20) is generally rectangular.

## Revendications

1. Coussin à gaz gonflable pour un système de retenue dans des véhicules automobiles, une pièce de matière (24) étant placée sur la paroi du coussin à gaz, la paroi du coussin à gaz présentant un orifice de détente (20) découpé, qui est fermé par la pièce de matière (26), laquelle est assemblée par une couture (26) avec la paroi du coussin à gaz, le long de la bordure de l'orifice de détente (20), caractérisé en ce qu'à l'intérieur de la pièce de matière (24) est formée au moins une ligne de déchirure qui reste fermée jusqu'à une pression intérieure prédéterminée du coussin à gaz et qui est libérée en cas de dépassement de cette pression intérieure, et en ce que la ligne de déchirure est constituée de deux portions disposées en croix qui sont formées par quatre fentes (40, 42, 44, 46) disposées en croix dans la pièce de matière, dont les extrémités intérieures sont situées à l'extérieur de la zone centrale de la pièce de matière (24).

2. Coussin à gaz selon la revendication 1, caractérisé en ce que l'orifice de détente (20) est généralement circulaire.

3. Coussin à gaz selon la revendication 1, caractérisé en ce que l'orifice de détente (20) est généralement rectangulaire.
